(19) Europäisches Patentamt
European Patent Office
Office européen des brevets

(11) EP 1 706 436 B1

(12) **EUROPEAN PATENT SPECIFICATION**

(45) Date of publication and mention of the grant of the patent:
**04.09.2013 Bulletin 2013/36**

(21) Application number: **05701923.4**

(22) Date of filing: **14.01.2005**

(51) Int Cl.:
***C08F 210/16*** *(2006.01)* ***C08F 2/34*** *(2006.01)*
***C08F 4/6592*** *(2006.01)*

(86) International application number:
**PCT/GB2005/000157**

(87) International publication number:
**WO 2005/070976 (04.08.2005 Gazette 2005/31)**

(54) **POLYMERISATION PROCESS**
POLYMERISATIONSVERFAHREN
PROCEDE DE POLYMERISATION

(84) Designated Contracting States:
**AT BE BG CH CY CZ DE DK EE ES FI FR GB GR HU IE IS IT LI LT LU MC NL PL PT RO SE SI SK TR**

(30) Priority: **22.01.2004 GB 0401348**

(43) Date of publication of application:
**04.10.2006 Bulletin 2006/40**

(73) Proprietor: **Ineos Commercial Services UK Limited Hampshire SO43 7FG (GB)**

(72) Inventors:
- **JACOBSEN, Grant, Berent B-3080 Tervuren (BE)**
- **LALANNE-MAGNE, Claudine, Viviane F-13920 Saint Mitre les Remparts (FR)**
- **SERE PEYRIGAIN, Pierre F-13800 Istres (FR)**

(74) Representative: **King, Alex et al
Mathisen & Macara LLP
Communications House
South Street
Staines-upon-Thames
Middlesex, TW18 4PR (GB)**

(56) References cited:
**WO-A-00/39170 WO-A-02/077045
WO-A-02/090365 US-A- 5 948 871**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 706 436 B1

## Description

The present invention relates to a polymerisation process and in particular to a polymerisation process for the copolymerisation of ethylene and higher $\alpha$-olefins performed in the gas phase.

The gas phase process for the polymerisation of olefins has been widely used in particular for the copolymerisation of ethylene and $\alpha$-olefins. Commercial production of such copolymers using traditional Ziegler-Natta catalysts has however been limited to the copolymerisation of ethylene and $\alpha$-olefins having carbon chain lengths of C6 (1-hexene) or less used for example for the preparation of linear low density polyethylene (LLDPE).

Higher $\alpha$-olefins have higher boiling points and when used in gas phase polymerisation processes condensation of the higher $\alpha$-olefins may occur at concentrations typically used for the production of LLDPE when using Ziegler-Natta catalysts. This may result in problems with continuous and smooth operation.

The use of higher $\alpha$-olefins for the manufacture of LLDPE has thus been limited to solution phase polymerisation processes. It would be advantageous therefore to develop a gas phase process for the production of LLDPE which allowed for the use of higher $\alpha$-olefins as comonomers thereby enabling LLDPE resins to be prepared with a broad range of density.

US 5100979 describes a process for producing ethylene/1-octene copolymers in the gas phase in a fluidised bed reactor in the presence of a supported vanadium catalyst where the partial pressures are controlled and the temperature in the reactor is maintained between 5 and 20 ° C above the dew point of 1-octene.

US 5106926 describes a similar process for preparing ethylene/1-octene copolymers in a gas phase fluidised bed process in the presence of titanium based catalysts. Again the partial pressures and reactor temperatures are controlled in this case the latter at between 1 and 30 ° C above the dew point of the 1-octene.

US 6521722 describes the gas phase copolymeriation of ethylene and 1-octene in the presence of a Ziegler Natta catalyst system and where the pressure and temperature of the reaction zone are set so as to define an operating point from 0.2 to 5.0 bar below the dew point of the reaction mixture above which condensation occurs.

WO 94/03509 describes the gas phase polymerisation of ethylene and higher $\alpha$-olefins especially 1-octene to produce polymers with densities in the range 0.850 to 0.940. The polymerisation is controlled with respect to the partial pressures of the reactants and takes place in the presence of transition metal catalyst systems in particular those comprising metallocene complexes.

Exemplified gas phase processes in WO 94/03509 are those operating in a conventional fluidised bed reactor in the presence of a catalyst system comprising a silica supported bis (cyclopentadienyl) zirconium dichloride activated by methyl aluminoxane (MAO).

We have now surprisingly found that higher $\alpha$-olefins may be successfully employed in a gas phase process provided the amount of higher $\alpha$-olefin comonomer is maintained below that at which substantial condensation occurs. Such operation is also dependent upon the operation temperature and the boiling point of the higher $\alpha$-olefin and the process is particularly advantageous when performed in the presence of catalysts able to incorporate high levels of comonomers at low comonomer inventories. Suitable catalysts of this type are metallocenes and other single site catalysts which may lead to the production of LLDPE resins having commercially interesting densities without resulting in reactor operational difficulties.

The present invention is directed to fluidised bed gas phase processes operating in "condensed mode".

Condensed mode is defined as the process of purposefully introducing a recycle stream having a liquid and a gas phase into the reactor such that the weight percent of liquid based on the total weight of the recycle stream is greater than about 2.0 weight percent.

Condensed mode operation is fully described in EP 89691, US 4543399, US 4588790, EP 696293, US 5405922, EP 699213 and US 5541270.

Thus according to the present invention there is provided a process for the copolymerisation of ethylene and an $\alpha$-olefin having 7 to 10 carbon atoms in a fluidised bed gas phase reactor in the presence of a single site polymerisation catalyst *characterised in that* said process is operating in condensed mode and wherein the amount of said $\alpha$-olefin is maintained below that at which substantial condensation in the reactor occurs.

The $\alpha$-olefin comonomer is maintained below that at which substantial condensation in the reactor occurs by maintaining the temperature and partial pressures in the reaction zone accordingly.

The comonomer content of the copolymer is controlled by the partial pressure of the various monomers. The partial pressure of the comonomer in the reaction zone is maintained up to an amount which would, at a temperature of about 10°C less than the temperature of the monomer mixture in the reaction zone, be the saturated vapour pressure of the comonomer to prevent condensation of the comonomer in the reaction zone.

Preferred $\alpha$-olefins are 1-octene, 1-decene, norbornene and similar.

A particularly preferred $\alpha$-olefin is 1-octene.

The polymerisation process according to the present invention is suitable for the copolymerisation of ethylene and an $\alpha$-olefin having 7 to 10 carbon atoms in a fluidised bed gas phase reactor operating in condensed mode at a

pressure of between 0.5 and 6 Mpa and at a temperature of between 30°C and 130°C.

Preferred conditions for operating the process of the present invention are temperatures in the range 70 to 90°C and pressures in the range 1 to 3 Mpa.

Suitable partial pressures for the gas phase components based on $C_8$ or $C_{10}$ as comonomer are as follows:

Ethylene - between 0.5 and 2 Mpa, preferably between 1 and 1.5 Mpa.
1-Octene/ethylene partial pressure ratio is between 0.0001 and 0.02 and preferably between 0.002 and 0.015.
1-Decene/ethylene partial pressure ratio is between 0.00005 and 0.005 , preferably between 0.0001 and 0.0015.

Preferably the process of the present invention is a continuous process.

Traditional Ziegler Natta polymerisation catalysts are composed of many types of catalytic species each at different metal oxidation states and different coordination environments with ligands. Metal halides activated by organometallic cocatalysts such as titanium chlorides complexed with trialkylaluminium compounds are typical examples of such catalyst systems. Because these systems contain more than one catalytic species they possess polymerisation sites with different activities and varying abilities to incorporate comonomer into the polymer chain.

On the contrary a single site polymerisation catalyst is a system having catalytic positions which have single activity and selectivity. The resultant copolymer chains are uniform not only in chain length but also in average comonomer content and even regularlity of comonomer incorporation along the chain.

The preferred single site polymerisation catalyst suitable for use in the process of the present invention is a bulky ligand compound also referred to as a metallocene complex containing at least one delocalized $\pi$-bonded group, in particular cyclopentadienyl ligands. Such metallocene complexes are those based on Group IVA metals for example titanium, zirconium and hafnium.

Metallocene complexes may suitably be represented by the general formula:

LxMQN

where L is a cyclopentadienyl ligand, M is a Group IVA metal, Q is a leaving group and x and n are dependent upon the oxidation state of the metal.

Typically the Group IVA metal is titanium, zirconium or hafnium, x is either 1 or 2 and typical leaving groups include halogen or hydrocarbyl. The cyclopentadienyl ligands may be substituted for example by alkyl or alkenyl groups or may comprise a fused ring system such as indenyl or fluorenyl.

Examples of suitable metallocene complexes are disclosed in EP 129368 and EP 206794. Such complexes may be unbridged eg. bis(cyclopentadienyl) zirconium dichloride, bis(pentamethyl)cyclopentadienyl dichloride, or may be bridged eg. ethylene bis(indenyl) zirconium dichloride or dimethylsilyl(indenyl) zirconium dichloride.

Other suitable bis (cyclopentadienyl) metallocene complexes are those bis (cyclopentadienyl) diene complexes described in WO 96/04290. Examples of such complexes are bis (cyclopentadienyl) zirconium (2.3- dimethyl- 1, 3-butadiene) and ethylene bis (indenyl) zirconium 1, 4- diphenyl butadiene.

Examples of monocyclopentadienyl or substituted monocyclopentadienyl complexes suitable for use in the present invention are described in EP 416815, EP 418044, EP 420436 and EP 551277. Suitable complexes may be represented by the general formula:

$CpMX_n$

wherein Cp is a single cyclopentadienyl or substituted cyclopentadienyl group optionally covalently bonded to M through a substituent, M is a Group VIA metal bound in a $\eta^5$ bonding mode to the cyclopentadienyl or substituted cyclopentadienyl group, X each occurrence is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms or optionally one X together with Cp forms a metallocycle with M and n is dependent upon the valency of the metal.

Particularly preferred monocyclopentadienyl complexes have the formula:

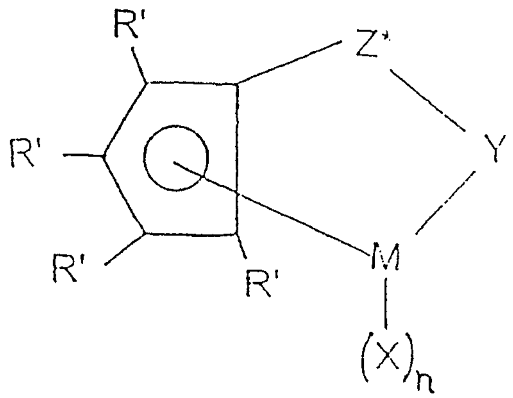

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;

X is hydride or a moiety selected from the group consisting of halo, alkyl, aryl, aryloxy, alkoxy, alkoxyalkyl, amidoalkyl, siloxyalkyl etc. having up to 20 non- hydrogen atoms and neutral Lewis base ligands having up to 20 non- hydrogen atoms,

Y is- O-, -S-, -NR*-, -PR*-,

M is hafnium, titanium or zirconium,

Z* is $SiR^*_2$, $CR^*_2$, $SiR^*_2SIR^*_2$, $CR^*_2CR^*_2$, CR*=CR*, $CR^*_2SIR^*_2$, or $GeR^*_2$, wherein:

R* each occurrence is independently hydrogen, or a member selected from hydrocarbyl, silyl, halogenated alkyl, halogenated aryl, and combinations thereof, said

R* having up to 10 non-hydrogen atoms, and optionally, two R* groups from Z* (when R* is not hydrogen), or an R* group from Z* and an R* group from Y form a ring system.,

and n is 1 or 2 depending on the valence of M.

Examples of suitable monocyclopentadienyl complexes are (tert- butylamido) dimethyl (tetramethyl- $\eta^5$- cyclopentadienyl) silanetitanium dichloride and (2- methoxyphenylamido) dimethyl (tetramethyl-- $\eta^5$- cyclopentadienyl) silanetitanium dichloride.

Other suitable monocyclopentadienyl complexes are those comprising phosphinimine ligands described in WO 99/40125, WO 00/05237, WO 00/05238 and WO00/32653. A typical examples of such a complex is cyclopentadienyl titanium [tri (tertiary butyl) phosphinimine] dichloride.

Another type of single site catalyst suitable for use in the present invention are monocyclopentadienyl complexes comprising heteroallyl moieties such as zirconium (cyclopentadienyl) tris (diethylcarbamates) as described in US 5527752 and WO 99/61486.

Particularly preferred metallocene complexes for use in the present invention may be represented by the general formula:

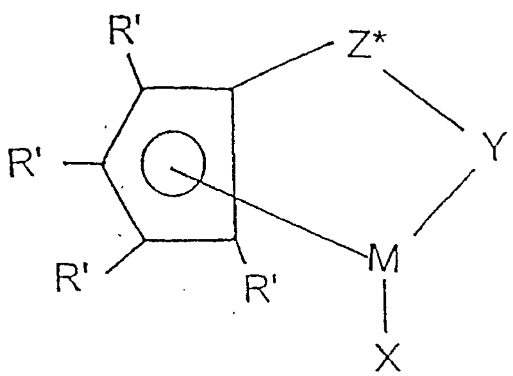

wherein:-

R' each occurrence is independently selected from hydrogen, hydrocarbyl, silyl, gennyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is a neutral $\eta^4$ bonded diene group having up to 30 non-hydrogen atoms, which forms a $\pi$-complex with M;
Y is -O-, -S-, -NR*-, -PR*-,
M is titanium or zirconium in the + 2 format oxidation state;
Z* is $SiR^*_2$, $CR^*_2$, $SiR^*_2SIR^*_2$, $CR^*_2CR^*_2$, CR*=CR*, $CR^*_2SIR^*_2$, or $GeR^*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system.

Examples of suitable X groups include s- trans- $\eta^4$- 1, 4- diphenyl- 1, 3- butadiene, s- trans- $\eta^4$- 3- methyl- 1, 3- pentadiene; s- trans- $\eta^4$- 2, 4- hexadiene; s- trans- $\eta^4$- 1, 3- pentadiene; s- trans- $\eta^4$- 1, 4- ditolyl- 1, 3- butadiene; s- trans- $\eta^4$- 1, 4- bis (trimethylsilyl)- 1, 3- butadiene; s- cis- $\eta^4$- 3- methyl- 1, 3- pentadiene; s- cis- $\eta^4$- 1, 4- dibenzyl- 1, 3- butadiene; s- cis- $\eta^4$- 1, 3- pentadiene; s- cis- $\eta^4$- 1, 4- bis (trimethylsilyl)- 1, 3- butadiene, said s- cis diene group forming a $\pi$- complex as defined herein with the metal.
Most preferably R' is hydrogen, methyl, ethyl, propyl, butyl, pentyl, hexyl, benzyl, or phenyl or 2 R' groups (except hydrogen) are linked together, the entire $C_5R'_4$ group thereby being, for example, an indenyl, tetrahydroindenyl, fluorenyl, terahydrofluorenyl, or octahydrofluorenyl group.
Highly preferred Y groups are nitrogen or phosphorus containing groups containing a group corresponding to the formula -N(R//)- or -P(R//)- wherein R// is $C_{1-10}$ hydrocarbyl.
Most preferred complexes are amidosilane - or amidoalkanediyl complexes.
Most preferred complexes are those wherein M is titanium.
Specific complexes suitable for use in the present invention are those disclosed in WO 95/00526 and are incorporated herein by reference.
A particularly preferred complex for is (t- butylamido) (tetramethyl- $\eta^5$- cyclopentadienyl) dimethyl silanetitanium- $\eta^4$- 1.3- pentadiene.
Suitable cocatalysts for use with the transition metal polymerisation of the present invention are those typically used with the aforementioned polymerisation catalysts.
These include aluminoxanes such as methyl aluminoxane (MAO), boranes such as tris(pentafluorophenyl) borane and borates.
Aluminoxanes are well known in the art and preferably comprise oligomeric linear and/or cyclic alkyl aluminoxanes. Aluminoxanes may be prepared in a number of ways and preferably are prepare by contacting water and a trialkylaluminium compound, for example trimethylaluminium, in a suitable organic medium such as benzene or an aliphatic hydrocarbon.
A preferred aluminoxane is methyl aluminoxane (MAO).
Other suitable cocatalysts are organoboron compounds in particular triarylboron compounds. A particularly preferred triarylboron compound is tris(pentafluorophenyl) borane.
Other compounds suitable as cocatalysts are compounds which comprise a cation and an anion. The cation is typically a Bronsted acid capable of donating a proton and the anion is typically a compatible non-coordinating bulky species capable of stabilizing the cation.
Such cocatalysts may be represented by the formula:

$$(L^*\text{-}H)^+_d\ (A^{d-})$$

wherein
L* is a neutral Lewis base
$(L^*\text{-}H)^+_d$ is a Bronsted acid
$A^{d-}$ is a non- coordinating compatible anion having a charge of $d^-$, and
d is an integer from 1 to 3.
The cation of the ionic compound may be selected from the group consisting of acidic cations, carbonium cations, silylium cations, oxonium cations, organometallic cations and cationic oxidizing agents.
Suitably preferred cations include trihydrocarbyl substituted ammonium cations eg. triethylammonium, tripropylammonium, tri (n- butyl) ammonium and similar. Also suitable are N.N- dialkylanilinium cations such as N, N- dimethylanilinium cations.

The preferred ionic compounds used as cocatalysts are those wherein the cation of the ionic compound comprises a hydrocarbyl substituted ammonium salt and the anion comprises an aryl substituted borate..

Typical borates suitable as ionic compounds include:

triethylammonium tetraphenylborate
triethylammonium tetraphenylborate,
tripropylammonium tetraphenylborate,
tri (n- butyl) ammonium tetraphenylborate,
tri (t- butyl) ammonium tetraphenylborate,
N,N-dimethylanilinium tetraphenylborate,
N,N-diethylanilinium tetraphenylborate,
trimethylammonium tetrakis(pentafluorophenyl) borate,
triethylammonium tetrakis(pentafluorophenyl) borate,
tripropylammonium tetrakis(pentafluorophenyl) borate,
tri (n- butyl) ammonium tetrakis (pentafluorophenyl) borate,
N,N-dimethylanilinium tetrakis(pentafluorophenyl) borate,
N,N-diethylanilinium tetrakis(pentafluorophenyl) borate.

A preferred type of cocatalyst suitable for use with the metallocene complexes of the present invention comprises ionic compounds comprising a cation and an anion wherein the anion has at least one substituent comprising a moiety having an active hydrogen.

Suitable cocatalysts of this type are described in WO 98/27119 the relevant portions of which are incorporated herein by reference.

Examples of this type of anion include:

triphenyl(hydroxyphenyl) borate
tri (p- tolyl) (hydroxyphenyl) borate
tris (pentafluorophenyl) (hydroxyphenyl) borate
tris (pentafluorophenyl) (4- hydroxyphenyl) borate

Examples of suitable cations for this type of cocatalyst include triethylammonium, triisopropylammonium, diethylmethylammonium, dibutylethylammonium and similar.

Particularly suitable are those cations having longer alkyl chains such as dihexyldecylmethylammonium, dioctadecylmethylammonium, ditetradecylmethylammonium, bis(hydrogentated tallow alkyl) methylammonium and similar.

Particular preferred cocatalysts of this type are alkylammonium tris (pentafluorophenyl) 4- (hydroxyphenyl) borates. A particularly preferred cocatalyst is bis (hydrogenated tallow alkyl) methyl ammonium tris (pentafluorophenyl) (4- hydroxyphenyl) borate.

With respect to this type of cocatalyst , a preferred compound is the reaction product of an alkylammonium tris (pentaflurophenyl)- 4- (hydroxyphenyl) borate and an organometallic compound, for example triethylaluminium or an aluminoxane such as tetraisobutylaluminoxane.

The single site polymerisation catalysts may suitably be supported.

Suitable support materials include inorganic metal oxides or alternatively polymeric supports may be used for example polyethylene, polypropylene, clays, zeolites, etc.

The most preferred support material for use with the supported catalysts according to the method of the present invention is silica. Suitable silicas include Ineos ES70 and Grace Davison 948 silicas.

The support material may be subjected to a heat treatment and/or chemical treatment to reduce the water content or the hydroxyl content of the support material. Typically chemical dehydration agents are reactive metal hydrides, aluminium alkyls and halides. Prior to its use the support material may be subjected to treatment at 100°C to 1000°C and preferably at 200 to 850°C in an inert atmosphere under reduced pressure.

The porous supports are preferably pretreated with an organometallic compound preferably an organoaluminium compound and most preferably a trialkylaluminium compound in a dilute solvent.

The support material is pretreated with the organometallic compound at a temperature of -20°C to 150°C and preferably at 20°C to 100°C.

Preferred organoaluminium compounds are trialkyl aluminium compounds containing from 1 to 20 carbons atoms in each alkyl group. Preferred trialkylaluminium compounds are trimethylaluminium, triethylaluminium, triisopropylaluminium and triisobutylaluminium.

Suitable catalyst systems for use in the process of the present invention are those described in WO 04/018530, WO 04/018531, WO 04/020487, WO 04/055062 and WO 04/055063.

Gas phase processes for the copolymerisation of ethylene and α-olefins are well known in the art. Particularly preferred gas phase processes are those operating in a fluidised bed.

In a fluidised bed polymerisation of olefins, the polymerisation is conducted in a fluidised bed reactor wherein a bed of polymer particles are maintained in a fluidised state by means of an ascending gas stream comprising the gaseous reaction monomer. A fluidisation grid is used to distribute the fluidising gas to the bed and to act as a support for the bed when the supply of gas is cut off. The polymer product is generally withdrawn from the reactor via a discharge conduit arranged in th elower portion of the reactor near the fluidisation grid. The fluidised bed comprises a bed of growing polymer particles, polymer product particles and catalyst particles. The reaction mixture is maintained in a fluidised condition by the continuous upward flow from the base of the reactor of a fluidising gas which comprises recycle gas from the top of the reactor together with make up feed.

The polymerisation of olefins is an exothermic reaction and it is therefore necessary to provide means to cool the bed to remove the heat of polymerisation. In the fluidised bed polymerisation of olefins one method of removing the heat is by use of "condensed mode" operation. This process comprises cooling part or all of the unreacted fluids to form a two phase mixture of gas and entrianed liquid below the dew point and reintroducing said two phase mixture into the reactor.

Gas phase processes operating in "condensed mode" are fully described in the aforementioned EP 89691, US 4543399, US 4588790, EP 696293, US 5405922, EP 699213 and US 5541270.

Typical operating conditions for such fluidised bed gas phase processes operating in "condensed mode" are temperatures in the range 30°C to 130°C and most preferably in the range 70°C to 90°C with pressures in the range 0.5 to 6 Mpa. and most preferably in the range 1 and 3 Mpa.

By use of the process conditions of the present invention, higher α-olefins may be successfully employed in a gas phase process provided the amount of higher α-olefin comonomer is maintained below that at which substantial condensation occurs. Such operation is also dependent upon the operation temperature and the boiling point of the higher α-olefin and the process is particularly advantageous when performed in the presence of catalysts able to incorporate high'levels of comonomers at low comonomer inventories.

## Claims

1. A process for the copolymerisation of ethylene and an α-olefin having 7 to 10 carbon atoms in a fluidised bed gas phase reactor in the presence of a single site polymerisation catalyst ***characterised in that*** said process is operating in condensed mode and wherein the partial pressure of said α-olefin in the reaction zone is maintained up to an amount which would, at a temperature of about 10°C less than the temperature of the monomer mixture in the reaction zone, be the saturated vapour pressure of said α-olefin to thereby prevent condensation of said α-olefin in the reaction zone.

2. A process according to claim 1 wherein the partial pressure of ethylene in the reactor is in the range 0.5 to 2 Mpa.

3. A process according to either of the preceding claims wherein the α-olefin is 1-octene.

4. A process according to claim 3 wherein the ratio of 1-octene/ethylene partial pressure is in the range 0.0001 to 0.02.

5. A process according to claims 1 or 2 wherein the α-olefin is 1-decene.

6. A process according to claim 5 wherein the ratio of 1-decene/ethylene partial pressure is in the range 0.00005 to 0.005.

7. A process according to any of the preceding claims wherein the process is continuous.

8. A prcocess according to any of the preceding claims wherein the single site polymeriation catalyst is a metallocene complex.

9. A process according to claim 8 wherein the metallocene complex has the general formula

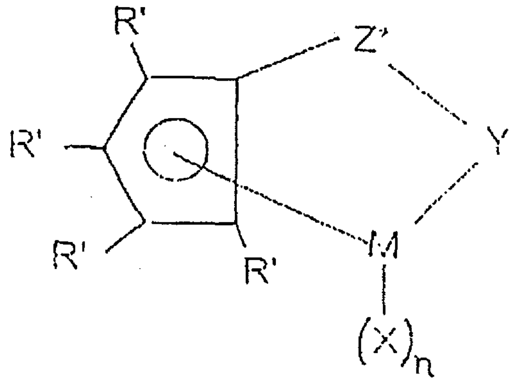

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms,
Y is -O-, -S-, -NR*-, -PR*-,
M is hafnium, titanium or zirconium,
Z* is $SiR*_2$, $CR*_2$, $SiR*_2SIR*_2$, $CR*_2CR*_2$, CR*=CR*, $CR*_2SIR*_2$, or
$GeR*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system.,

and n is 1 or 2 depending on the valence of M.

**10.** A process according to claim 8 wherein the metallocene complex has the general formula

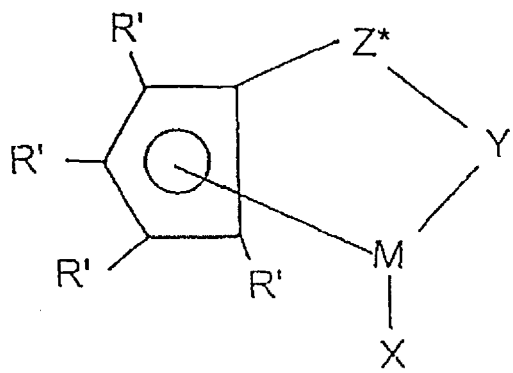

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the

cyclopentadienyl ring to form a fused ring structure;
X is a neutral $\eta^4$ bonded diene group having up to 30 non-hydrogen atoms, which forms a $\pi$-complex with M;
Y is -O-, -S-, -NR*-, -PR*-,
M is titanium or zirconium in the + 2 formal oxidation state;
Z* is $SiR^*_2$, $CR^*_2$, $SiR^*_2SIR^*_2$, $CR^*_2CR^*_2$, CR*=CR*, $CR^*_2SIR^*_2$, or $GeR^*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system.

**11.** A process according to either of claims 9 or 10 wherein the metal M is titanium.

## Patentansprüche

**1.** Verfahren zur Copolymerisation von Ethylen und einem $\alpha$-Olefin, das 7 bis 10 Kohlenstoffatome aufweist, in einem Wirbelschicht-Gasphasen-Reaktor in Gegenwart eines Polymerisationskatalysators mit einem einzigen aktiven Zentrum, **dadurch gekennzeichnet, dass** das Verfahren im kondensierten Modus bertrieben wird, wobei der Partialdruck des $\alpha$-Olefins in der Reaktionszone bis zu einer Menge, die bei einer Temperatur von etwa 10 °C weniger als der Temperatur des Monomergemischs in der Reaktionszone dem Sättigungsdampfdruck des $\alpha$-Olefins entspräche, aufrechterhalten wird, um dadurch eine Kondensation des $\alpha$-Olefins in der Reaktionszone zu verhindern.

**2.** Verfahren gemäß Anspruch 1, wobei der Partialdruck des Ethylens im Reaktor im Bereich von 0,5 bis 2 MPa liegt.

**3.** Verfahren gemäß einem der vorstehenden Ansprüche, wobei es sich bei dem $\alpha$-Olefin um 1-Octen handelt.

**4.** Verfahren gemäß Anspruch 3, wobei das Partialdruckverhältnis von 1-Octen/Ethylen im Bereich von 0,0001 bis 0,02 liegt.

**5.** Verfahren gemäß Anspruch 1 oder 2, wobei es sich bei dem $\alpha$-Olefin um 1-Decen handelt.

**6.** Verfahren gemäß Anspruch 5, wobei das Partialdruckverhältnis von 1-Decen/Ethylen im Bereich von 0,00005 bis 0,005 liegt.

**7.** Verfahren gemäß einem der vorstehenden Ansprüche, wobei das Verfahren kontinuierlich ist.

**8.** Verfahren gemäß einem der vorstehenden Ansprüche, wobei der Polymerisationskatalysator mit einem einzigen aktiven Zentrum ein Metallocen-Komplex ist.

**9.** Verfahren gemäß Anspruch 8, wobei der Metallocen-Komplex die allgemeine Formel

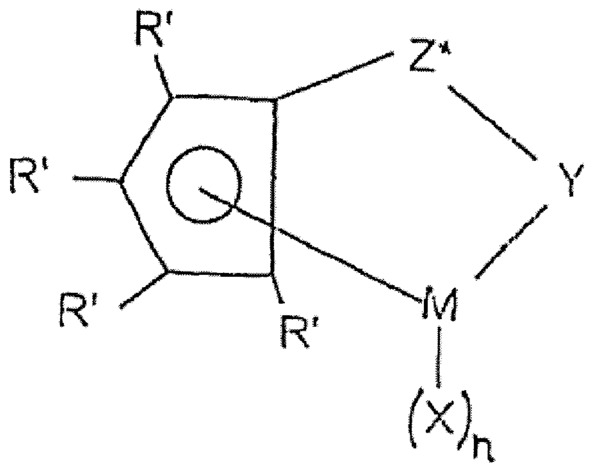

aufweist, wobei

R' überall, wo es vorkommt, unabhängig aus Wasserstoff, Hydrocarbyl, Silyl, Germyl, Halogen, Cyano und Kombinationen davon ausgewählt ist, wobei das R' bis zu 20 Nichtwasserstoffatome aufweist, und gegebenenfalls zwei R'-Gruppen (wobei R' nicht Wasserstoff, Halogen oder Cyano ist) zusammen ein zweiwertiges Derivat davon bilden, das an benachbarte Positionen des Cyclopentadienylrings gebunden ist, so dass eine kondensierte Ringstruktur entsteht;

X Hydrid oder eine Struktureinheit ist, die aus der Gruppe ausgewählt ist, die aus Halogen, Alkyl, Aryl, Aryloxy, Alkoxy, Alkoxyalkyl, Amidoalkyl,

Siloxyalkyl usw. mit bis zu 20 Nichtwasserstoffatomen und neutralen Lewis-Base-Liganden mit bis zu 20 Nichtwasserstoffatomen besteht;

Y = -O-, -S-, -NR*- oder -PR*- ist;

M = Hafnium, Titan oder Zirconium ist;

Z* = $SiR^*_2$, $CR^*_2$, $SiR^*_2SiR^*_2$, $CR^*_2CR^*_2$, CR*=CR*, $CR^*_2SiR^*_2$ oder $GeR^*_2$ ist, wobei:

R* überall, wo es vorkommt, unabhängig Wasserstoff oder ein Vertreter, der aus Hydrocarbyl, Silyl, halogeniertem Alkyl, halogeniertem Aryl und Kombinationen davon ausgewählt ist, ist, wobei das R* bis zu 10 Nichtwasserstoffatome aufweist, und gegebenenfalls zwei R*-Gruppen aus Z* (wenn R* nicht Wasserstoff ist) oder eine R*-Gruppe aus Z* und eine R*-Gruppe aus Y ein Ringsystem bilden; und

n je nach der Wertigkeit von M = 1 oder 2 ist.

**10.** Verfahren gemäß Anspruch 8, wobei der Metallocen-Komplex die allgemeine Formel

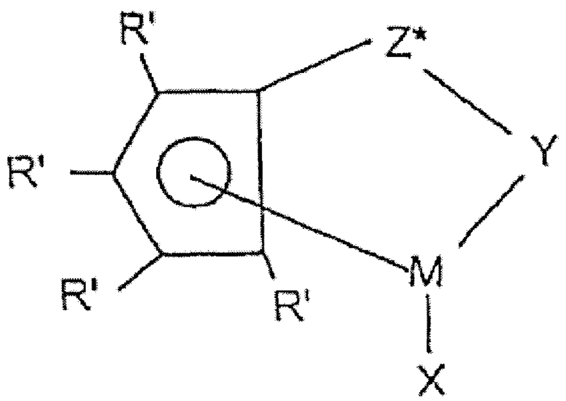

aufweist, wobei R' überall, wo es vorkommt, unabhängig aus Wasserstoff, Hydrocarbyl, Silyl, Germyl, Halogen, Cyano und Kombinationen davon ausgewählt ist, wobei das R' bis zu 20 Nichtwasserstoffatome aufweist, und gegebenenfalls zwei R'-Gruppen (wobei R' nicht Wasserstoff, Halogen oder Cyano ist) zusammen ein zweiwertiges Derivat davon bilden, das an benachbarte Positionen des Cyclopentadienylrings gebunden ist, so dass eine kondensierte Ringstruktur entsteht;

X eine neutrale $\eta^4$-gebundene Dien-Gruppe mit bis zu 30 Nichtwasserstoffatomen ist, die einen $\pi$-Komplex mit M bildet;

Y = -O-, -S-, -NR*- oder -PR*- ist;

M = Titan oder Zirconium in der formalen Oxidationsstufe +2 ist;

Z* = $SiR^*_2$, $CR^*_2$, $SiR^*_2SiR^*_2$, $CR^*_2CR^*_2$, CR*=CR*, $CR^*_2SiR^*_2$ oder $GeR^*_2$ ist, wobei:

R* überall, wo es vorkommt, unabhängig Wasserstoff oder ein Vertreter, der aus Hydrocarbyl, Silyl, halogeniertem Alkyl, halogeniertem Aryl und Kombinationen davon ausgewählt ist, ist, wobei das R* bis zu 10 Nichtwasserstoffatome aufweist, und gegebenenfalls zwei R*-Gruppen aus Z* (wenn R* nicht Wasserstoff ist) oder eine R*-Gruppe aus Z* und eine R*-Gruppe aus Y ein Ringsystem bilden.

**11.** Verfahren gemäß einem der Ansprüche 9 oder 10, wobei es sich bei dem Metall M um Titan handelt.

## Revendications

1. Procédé pour la copolymérisation d'éthylène et d'une oléfine $\alpha$ ayant de 7 à 10 atomes de carbone dans un réacteur en phase gazeuse à lit fluidisé en présence d'un catalyseur de polymérisation à site unique **caractérisé en ce que** ledit procédé fonctionne dans un mode condensé et dans lequel la pression partielle de ladite oléfine $\alpha$ dans la zone de réaction est maintenue jusqu'à une quantité qui, à une température d'environ 10°C inférieure à la température du mélange de monomères dans la zone de réaction, serait la pression de vapeur saturée de ladite oléfine $\alpha$ pour éviter par là une condensation de ladite oléfine $\alpha$ dans la zone de réaction.

2. Procédé selon la revendication 1, dans lequel la pression partielle d'éthylène dans le réacteur se trouve dans l'intervalle de 0,5 à 2 Mpa.

3. Procédé selon l'une quelconque des revendications précédentes, dans lequel l'oléfine $\alpha$ est le 1-octène.

4. Procédé selon la revendication 3, dans lequel le rapport de pression partielle 1-octène/éthylène se trouve dans l'intervalle de 0,0001 à 0,02.

5. Procédé selon la revendication 1 ou 2, dans lequel l'oléfine $\alpha$ est le 1-décène.

6. Procédé selon la revendication 5, dans lequel le rapport de pression partielle 1-décène/éthylène se trouve dans l'intervalle de 0,00005 à 0,005.

7. Procédé selon l'une quelconque des revendications précédentes, dans lequel le procédé est continu.

8. Procédé selon l'une quelconque des revendications précédentes, dans lequel le catalyseur de polymérisation à site unique unique est un complexe de métallocène.

9. Procédé selon la revendication 8, dans lequel le complexe de métallocène présente la formule générale

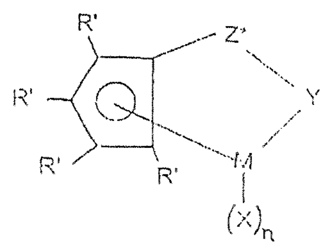

où :

R' est à chaque apparition indépendamment choisi parmi l'hydrogène, un groupe hydrocarbyle, silyle, germyle, halo, cyano, et des combinaisons de ceux-ci, ledit R' ayant jusqu'à 20 atomes différents de l'hydrogène, et éventuellement, deux groupes R' (où R' n'est pas l'hydrogène, un groupe halo ou cyano) forment ensemble un dérivé divalent de ceux-ci connecté à des positions adjacentes du cycle cyclopentadiényle pour former une structure cyclique condensée ;
X est un hydrure ou une moitié choisi dans le groupe constitué d'un groupe halo, alkyle, aryle, aryloxy, alcoxy, alcoxyalkyle, amidoalkyle, siloxyalkyle, etc. ayant jusqu'à 20 atomes différents de l'hydrogène et de ligands de bases de Lewis neutres ayant jusqu'à 20 atomes différents de l'hydrogène,
Y est -O-, -S-, -NR*-, -PR*-,
M est l'hafnium, le titane ou le zirconium,
Z* est $SiR^*_2$, $CR^*_2$, $SiR^*_2SIR^*_2$, $CR^*_2CR^*_2$, $CR^*=CR^*$, $CR^*_2SIR^*_2$, ou $GeR^*_2$, où :

R* est à chaque apparition indépendamment l'hydrogène, ou un élément choisi parmi un groupe hydrocarbyle, silyle, alkyle halogéné, aryle halogéné, et des combinaisons de ceux-ci, ledit R* ayant jusqu'à 10 atomes différents de l'hydrogène, et éventuellement, deux groupes R* de Z* (lorsque R* n'est pas l'hydrogène), ou un groupe R* de Z* et un groupe R* de Y forment un système cyclique,

et n est égal à 1 ou 2 selon la valence de M.

**10.** Procédé selon la revendication 8, dans lequel le complexe de métallocène présente la formule générale

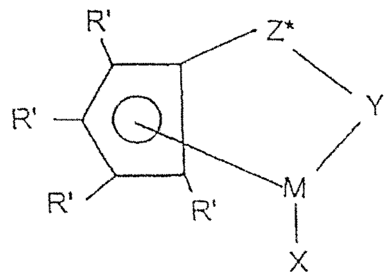

où :

R' est à chaque apparition indépendamment choisi parmi l'hydrogène, un groupe hydrocarbyle, silyle, germyle, halo, cyano, et des combinaisons de ceux-ci, ledit R' ayant jusqu'à 20 atomes différent de l'hydrogène, et éventuellement, deux groupes R' (où R' n'est pas l'hydrogène, un groupe halo ou cyano) forment ensemble un dérivé divalent de ceux-ci connecté à des positions adjacentes du cycle cylopentadiényle pour former une structure cyclique condensé ;
X est un groupe diène $\eta^4$ lié neutre ayant jusqu'à 30 atomes différents de l'hydrogène, lequel forme un complexe-$\pi$ avec M ;
Y est -O-, -S-, -NR*-, -PR*-,
M est le titane ou le zirconium dans l'état d'oxydation formel +2 ;
Z* est $SiR^*_2$, $CR^*_2$, $SiR^*_2SIR^*_2$, $CR^*_2CR^*_2$, CR*=CR*, $CR^*_2SIR^*_2$, ou $GeR^*_2$, où :

R* est à chaque apparition indépendamment l'hydrogène, ou un élément choisi parmi un groupe hydrocarbyle, silyle, alkyle halogéné, aryle halogéné, et des combinaisons de ceux-ci, ledit
R* ayant jusqu'à 10 atomes différents de l'hydrogène, et éventuellement, deux groupes R* de Z* (lorsque R* n'est pas l'hydrogène), ou un groupe R* de Z* et un groupe R* de Y forment un système cyclique.

**11.** Procédé selon l'une quelconque des revendications 9 ou 10, dans lequel le métal M est le titane.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5100979 A
- US 5106926 A
- US 6521722 B
- WO 9403509 A
- EP 89691 A
- US 4543399 A
- US 4588790 A
- EP 696293 A
- US 5405922 A
- EP 699213 A
- US 5541270 A
- EP 129368 A
- EP 206794 A
- WO 9604290 A
- EP 416815 A
- EP 418044 A
- EP 420436 A
- EP 551277 A
- WO 9940125 A
- WO 0005237 A
- WO 0005238 A
- WO 0032653 A
- US 5527752 A
- WO 9961486 A
- WO 9500526 A
- WO 9827119 A
- WO 04018530 A
- WO 04018531 A
- WO 04020487 A
- WO 04055062 A
- WO 04055063 A